## Europäisches Patentamt
## European Patent Office
## Office européen des brevets

(19)

(11) Veröffentlichungsnummer: **0 164 433**
**B1**

(12) **EUROPÄISCHE PATENTSCHRIFT**

(45) Veröffentlichungstag der Patentschrift:
**21.09.88**

(21) Anmeldenummer: **84106803.4**

(22) Anmeldetag: **14.06.84**

(51) Int. Cl.⁴: **C 04 B 38/00,** C 04 B 40/00,
C 04 B 28/00, B 28 C 5/00,
B 28 B 1/50

(54) **Verfahren zur Herstellung eines Formkörpers oder einer Bekleidung in Form eines Festschaumstoffes mit schwammiger Struktur.**

(43) Veröffentlichungstag der Anmeldung:
**18.12.85 Patentblatt 85/51**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
FR-A-678 149
GB-A-1 337 421

**CHEMICAL ABSTRACTS, Band 87, Nr. 26, 26. Dezember 1977, Seite 232, Spalte 1, Nr. 205613v, Columbus, Ohio, US; & SU - A - 571 455 (SARATOV POLYTECHNIC INSTITUTE, BALAKOVO) 05.09.1977**

(73) Patentinhaber: **Mader, Richard, Sämannstrasse 22, D-8032 Gräfelfing- Lochham (DE)**
Patentinhaber: **Csurgay, István, Mártirok utja 64/b, H-1027 Budapest (HU)**
Patentinhaber: **Szépvölgyi, János, Nádor u. 37, H-8230 Balatonfüred (HU)**
Patentinhaber: **Monostory, László, Hernád u. 26, H-1078 Budapest (HU)**

(72) Erfinder: **Mader, Richard, Sämannstrasse 22, D-8032 Gräfelfing- Lochham (DE)**
Erfinder: **Csurgay, István, Mártirok utja 64/b, H-1027 Budapest (HU)**
Erfinder: **Szépvölgyi, János, Nádor u. 37, H-8230 Balatonfüred (HU)**
Erfinder: **Monostory, László, Hernád u. 26, H-1078 Budapest (HU)**

(74) Vertreter: **von Puttkamer, Nikolaus, Dipl.- Ing., Pienzenauerstrasse 2, D-8000 München 80 (DE)**

EP 0 164 433 B1

## Beschreibung

Die Erfindung betrifft ein Verfahren zur Herstellung eines Formkörpers oder einer Bekleidung in Form eines Festschaumstoffes mit schwammiger Struktur nach dem Oberbegriff des Patentanspruches 1.

Es ist bekannt, daß den wärmebeständigen und feuerfesten Isolierstoffen, die in verschiedenen Heizvorrichtungen zur Verwendung kommen, immer größere Bedeutung beigemessen wird. Es ist weiterhin bekannt, daß infolge der Industrialisierung der Bautätigkeit die Verminderung des spezifischen Gewichtes immer mehr als eine Forderung gegenüber den zum Bau von Wohngebäuden verwendeten Baumaterialien in den Vordergrund trat. Es bestand die Forderung, vorgefertigte Elemente und Formkörper mit einer mikroporösen Struktur zu entwickeln, deren spezifisches Gewicht jenes der herkömmlichen, demselben Zwecke dienenden, vorgefertigten Elemente oder Formkörper unterschreitet, die aber gleichzeitig eine brefriedigende Wärmeisolierung gewährleisten, da bei der Anwendung derartiger Elemente und Formkörper mit den erwähnten Eigenschaften einerseits die Heizkosten vermindert und andererseits bedeutende Mengen an Energie oder Energieträgern eingespart werden können.

In der letzten Zeit wurden mehrere Verfahren vorgeschlagen, mit denen unterschiedliche wärmeisolierende Formkörper und Elemente dadurch hergestellt werden können, daß ein mörtelartiges intermediäres Produkt hergestellt wird, dem als Füllstoff vulkanische Glassorten, expandierter Perlit, Keramsitkies oder ähnliche Stoffe zugemischt wird. Als Bindemittel werden Zement, kaustischer Magnesit, Gips, Wasserglas, Kalk, Bitumen und verschiedene Kunststoffe verwendet.

In den letzten Jahren sind mehrere Verfahren bekannt geworden, mit deren Hilfe Leichtzuschlagstoffe mit verschiedenen Korngrößen hergestellt werden können. Diese stellen teilweise natürliche, teilweise künstliche Zuschlagstoffe dar, wie z. B. die verschiedenen Vulkanite, Kieselerden, Quellstoffe, Schiefersorten, Kohlenschlacken, Ziegelbrocken usw. Die obenbeschriebenen Leichtzuschlagsstoffe verändern sich während der Zerkleinerung oder Mahlung strukturell. Einerseits wird die Wasserabsorptionsfähigkeit, z. B. nach dem Mahlen des Schiefers oder des Quelltons, erhöht, was die Herstellung des Betons beeinträchtigt. Andererseits werden durch das Öffnen der Poren die Rohdichte und Wärmeisolierfähigkeit des hergestellten Betons beeinflußt.

Beispielsweise geht aus der DE-OS-2 016 677 ein Verfahren zur Herstellung einer Isoliermasse auf Zement- und/oder Kalkbasis hervor. Im Laufe dieses Verfahrens wird zur Herstellung der Isoliermasse ein Zuschlagstoff auf Gasbetonbasis verwendet. Der Nachteil dieses Verfahrens besteht darin, daß das zur Durchführung erforderliche Granulieren äußerst kostenaufwendig ist, und nur bei gewissen Kornfraktionen realisiert werden kann. Das Verfahren der DE-OS-1 811 033 betrifft ebenfalls die Herstellung von Leichtbetonzuschlagstoffen. Im Laufe dieses Verfahrens werden die Gasbeton- und/oder Porenbetonpartikel durch Dampfbehandlung erhärtet und auf eine Kugelform gestaltet, wodurch eine geschlossene Oberfläche erreicht wird.

Es sind weiterhin Verfahren bekannt, in deren Verlauf in dem Beton teilweise durch Gasbildner, teilweise durch Schaumbildner miteinander verbundene Hohlräume erzeugt werden, anstatt daß Leichtzuschlagstoffe verwendet werden.

Die Wasseraufnahme von Materialien mit einer derartigen Struktur ist äußerst hoch. Unter Anwendung der erwähnten Verfahren werden im allgemeinen Gasbeton, Schaumbeton und Schaumsilikate hergestellt. Derartige Verfahren beanspruchen großdimensionierte und äußerst kostenaufwendige Anlagen. Es sind beispielsweise Autoklaven für die Dampfbehandlung unerläßlich.

Die Herstellung der Elemente und Formkörper von geringem Raumgewicht aus einer gießbaren Masse für die Bau- und Isolierungsindustrie unter Anwendung der bekannten Verfahren ist von mehreren Standpunkten aus betrachtet nachteilig. Einer der wesentlichen Nachteile der bekannten Verfahren besteht darin, daß das Volumen der in die Form gegossenen Masse sich während der Erhärtung bedeutend vermindert. Das Maß der Schwinsung kann nicht mit der erforderlichen Genauigkeit geregelt werden. Die erhärteten Körper müssen daher zur Sicherung der endgültigen Dimensionen bearbeitet werden. Ein weiterer Nachteil der bekannten Verfahren besteht darin, daß das Raumgewicht des derart hergestellten Formkörpers, Elementes oder Fertigproduktes in einem großen Maße schwankt. Die Eigenschaften des Produktes sind nicht einmal innerhalb der einzelnen Elemente gleichmässig, was bedeutet, daß die Herstellung eines homogenen Produktes nicht möglich ist. Die Inhomogenität kann insbesondere damit erklärt werden, daß in den bekannten Gußmassen der Füllstoff und die Gasblasen sich infolge der Unterschiede in den spezifischen Gewichten während der langen Erhärtungsdauer aus der Flüssigkeit ausscheiden und sich entweder absetzen oder aufschwimmen.

Durch das bekannte Verfahren gemäß der HU-PS 165 195 sollten die Mängel und Nachteile bekannter Verfahren beseitigt werden. Das Wesentliche dieses Verfahrens besteht darin, daß den Grundstoffen und Füllstoffen Wasserglaslösung, als Schnellbindemittel inorganisches Silikofluorid und gegen das Absetzen Kolloidstoffe mit einem Molgewicht von mindestens 5000 zugemischt werden. Das mit diesem Verfahren hergestellte Produkt weist, insbesondere im Hinblick auf die Wärmeisolierfähigkeit ungünstige Eigenschaften auf, weil im Laufe des Verfahrens keine schaumartige Struktur bzw. Schaumbildung bewirkt wird.

Das aus der HU-PS 152 382 bekannte Verfahren bezieht sich auf die Herstellung von wärmeisolierenden feuerfesten Schamotten mit einem Raumgewicht unter 0,8 g/cm$^3$. Im Laufe dieses Verfahrens werden Schamottemehl, Tonmahlgut, expandierter Perlit und an sich bekannte Schaumbildner oder Schaumstoff verwendet. Ein beträchtliches Problem dieses Verfahrens besteht darin, daß die Trocknungszeit etwa 360 Stunden beträgt. Des weiteren weist das zur Verwendung kommende Material eine recht hohe linearen Schwindung auf. Außerdem ist die Ausschußrate während der Trocknung recht hoch.

2

Durch das aus der HU-PS 157 775 bekannte Verfahren sollen die Mängel und Nachteile des zuletzt erwähnten Verfahrens teilweise beseitigt werden. Zur Herabsetzung der linearen Schwindung werden neben den im Zusammenhang mit dem vorhererwähnten Verfahren beschriebenen Komponenten Aluminiumhydroxid und basisches Verflüssigungsmittel, z. B. Wasserglas, dem Gußschlamm zugegeben. Trotzdem beträgt die Schwindung noch immer 5-7 %.

In Fachkreisen ist es wohlbekannt, daß sich die Abbindefähigkeit der Normalportlandzemente oder Aluminatzemente in den aufgeschäumten Systemen verändert, daß sich die Abbindezeit verlängert und daß währenddessen die Gasblasen austreten. Wenn nur Füllstoffe verwendet werden, scheiden sich die Gasblasen und der Füllstoff infolge der unterschiedlichen spezifischen Gewichte und der langen Erhärtungsdauer aus der Flüssigkeit aus und setzen sich ab.

Die Aufgabe der Erfindung besteht darin, ein Verfahren zur Herstellung von Formkörpern oder Bekleidungen anzugeben, durch das ein Produkt erzeugbar ist, dessen Material einem aufgeschäumten System zugeordnet werden kann und eine mikroporöse Struktur aufweist, wobei die Eigenschaften dieses Produktes besser sind als diejenigen der nach dem bekannten Verfahren hergestellten Produkte.

Diese Aufgabe wird durch ein Verfahren der eingangs genannten Art gelöst, das durch die in dem kennzeichnenden Teil des Patentanspruches 1 angegebenen Merkmale gekennzeichnet ist.

Ein wesentlicher Vorteil besteht darin, daß das erfindungsgemäße Verfahren selbst als technologischer Prozeß vergleichsweise wenig kostenaufwendig ist und daß weder teuere, noch schwer anschaffbare Anlagen mit hohen Betriebskosten erforderlich sind.

Ein weiterer Vorteil besteht darin, daß durch das erfindungsgemäße Verfahren eine mikroporöse Schaumstruktur herstellbar ist, die eine hochgradige Wärmebeständigkeit aufweist, d.h. gegenüber einer Betriebstemperatur von 1600°C oder einer noch höheren Betriebstemperatur beständig ist, und die aus tonfreien, in der Oxidkeramik verwendeten Grundstoffen aufgebaut werden kann. Die derart hergestellte mikroporöse Schaumstruktur kann vorteilhaft als Auskleidungsmaterial für Reaktoren und für Wärmebehandlungs- oder Brennanlagen verwendet werden, die bei hohen Temperaturen arbeiten.

Um zur vorliegenden Erfindung zu gelangen, mußte eine gründliche Analyse der physikalischen und chemischen Gesetzmäßigkeiten der Feststoffpartikeldispersionen in einem wäßrigen Medium (Suspensionen), sowie der Gasdispersionen in einem wäßrigen Medium (Schäume) durchgeführt werden.

Dem Wesen nach handelt es sich bei Schäumen eigentlich um in einem flüssigen Medium dispergierte Gase. Die Gasdispersionen von hoher Konzentration verzerren das flüssige Medium zu dünnen Filmen bzw. Lamellen, wobei diese Lamellen die Gasblasen voneinander trennen. Permanente Schäume können nur aus den Lösungen schaumbildender Stoffe hergestellt werden. Als solche werden die aus wäßrigen amphiphilen Molekülen oder Makromolekülen aufgebauten Materialien erwähnt.

Nach dem strukturellen Aufbau bestehen zweierlei Schäume. Die eine Schaumart ist der polyedrische Schaum, der als tatsächlicher Schaum betrachtet wird. Die andere Schaumart ist der sogenannte Kugelschaum, der sich zwangsweise in tatsächliche Schäume umwandelt. Die potentielle Energie der Schäume ist größer als jene der Mehrphase, wodurch die Stabilität der Schäume einen metastabilen Gleichgewichtszustand darstellt, d.h. sie bleibt nur für eine längere-kürzere Zeitspanne unverändert. Beim Zerfallen von Schäumen treten die folgenden Prozesse auf: Zunächst sickert die Flüssigkeit aus den Schaumlamellen aus. Die Gasblasen diffundieren dann in jeweils grössere Gasblasen. Die Flüssigkeit verdampft und es treten äussere Einflüsse, wie z. B. Temperaturdifferenzen, auf, die dazu führen, daß die Lamellen auseinanderlaufen, woraufhin die Schaumstruktur zerfällt.

In den dreiphasigen groben Dispersionssystemen nehmen alle drei Phasen, d.h. also Gas, Flüssigkeit und Festpartikel, an dem Aufbau des Systems teil. Die wäßrigen dreiphasigen Festpartikel-Gasdispersionen befinden sich nicht in einem thermodynamischen Gleichgewichtszustand. Infolge des Bestrebens nach der kleinsten freien Energie treten eine Änderung des Dispersionsgrades, eine Koagulation und ein Absetzen auf. Das elektrokinetische Potential fällt unter den kritischen Wert; Desorption und Dehydratation finden gleicherweise statt. Die einzelnen Teilprozesse können einander überdecken oder einander zuvorkommen.

Wenn die theoretischen und praktischen Zusammenhänge in Betracht gezogen werden, können die Grundbedingungen für die Stabilität der dreiphasigen Schäume die folgenden sein: die Aktivierung der Grenzflächen, der elektrische Potentialdamm und sich daraus ergebend die Gestaltung und Stabilität der elektrischen Doppelschicht, das elektromagnetische Kraftfeld, das Absorptionsgleichgewicht, die chemischen Bedingungen (Chemosorption), die Gasdispersion und schließlich die Gestaltung und Stabilisierung des Gelierungsprozesses.

Die festgestellten Optimalforderungen sind infolge ihres Charakters kontradiktorisch. Eine Realisierung ist daher nur stufenweise und erst dann möglich, wenn die aufeinanderfolgenden Schritte den vorherigen Zustand nicht zerstören.

Alle die Mängel und Nachteile der bekannten Verfahren können mit den dargestellten theoretischen Zusammenhängen erklärt werden. Höchstwahrscheinlich wurden bei der Entwicklung der bekannten Verfahren die grundsätzlichen theoretischen Zusammenhänge nicht überprüft oder wurden diese nicht mit der gebührenden Gründlichkeit analysiert. Die unter Anwendung der bekannten Verfahren hergestellten Produkte unterscheiden sich nur in geringem Maße.

Im Laufe der vorliegenden Forschungstätigkeit und der vorliegenden Versuche wurde überraschend erkannt, daß dann, wenn der Schaum elektrisch aufgeladen wird, die Grenzflächen innerhalb des Schaumes aktiviert werden können, wodurch eine außergewöhnliche Stabilität des Dreiphasensystems erreicht werden kann. Die elektrische Doppelschicht kommt zustande, und da das wäßrige Medium des elektrisch aufgeladenen Schaumes nicht dehydratisiert, konsolidiert sich bis zur Gestaltung der chemischen Bindung der Gleichgewichtszustand, der die schwindungsfreie Abbindung und Trocknung gewährleistet.

Die Versuchsergebnisse haben bestätigt, daß aus den mit der gleichen Technologie hergestellten keramischen Schäumen der gleichen Zusammensetzung, unabhängig von der Variation der Füllstoffe, nur die elektrisch aufgeladenen Schäume hervorragend günstige Eigenschaften aufweisen. Im Laufe der elektrischen Aufladung befinden sich nämlich die Ladungsträger entlang der von der Flüssigkeitsphase gebildeten Lamellenflächen zwischen den Gaszellen des Schaumes, wodurch die Stabilität des Dreiphasensystems erreicht wird.

Im Laufe der vorliegenden Versuche wurde erkannt, daß an den zwischen den Gaszellen des Schaumes vorhandenen Lamellenflächen ein Potential im Bereich zwischen 50 und 2000 mV, vorteilhaft zwischen 150 und 1000 mV, erforderlich ist.

Die elektrische Aufladung des Schaumes wird durch Reibwirkung erreicht. Die Reibungselektrizität wird derweise gewonnen, daß in einem Behälter eine Zentrifugalpumpe angeordnet wird. Das Gehäuse und der Rotor der Zentrifugalpumpe werden aus einem elektrisch isolierenden Stoff, z. B. Ebonit, hergestellt. Die schaumbildende Lösung, deren Zusammensetzung später genauer erläutert wird, wird mit Hilfe der Zentrifugalpumpe in Zirkulation gebracht und zwischen den nicht elektrischen Pumpenbestandteilen zu einer mehrmaligen Richtungsänderung und Kollision gezwungen. Die während der Strömung entstehende Reibung bewirkt die elektrische Aufladung und damit die Entstehung eines cremeartigen Schaumes.

Während oder nach der Schaumbildung wird der Lösung ein Bindemittel, das später noch beschrieben wird, ein Füllstoff oder ein sonstiger Zuschlagstoff zugemischt. Die mit einer Flüssigkeit aufbereitete, zweckmäßigerweise wäßrige Mischung des Bindemittels, des Füllstoffes und der eventuell in Frage kommenden Zuschlagstoffe wird zweckdienlicherweise dem Schaum zugegeben.

Demnach besteht der wesentliche Schritt des erfindungsgemäßen Verfahrens darin, daß der aus einer an sich bekannten schaumbildenden Lösung gewonnene Schaum elektrisch aufgeladen wird und daß während der Schaumbildung oder danach das Bindemittel, der Füllstoff oder eventuell ein sonstiger Zuschlagstoff oder deren mit einer Flüssigkeit verfestigte Mischung zugegeben werden.

Das vorliegende Verfahren wird derart durchgeführt, daß die Lamellenflächen zwischen den Gaszellen des Schaumes auf ein elektrisches Potential von 50 - 2000 mV, vorteilhaft 150 bis 1000 mV, aufgeladen werden.

Das erfindungsgemäße Verfahren wird unter Zuhilfenahme einer elektrostatischen Maschine durchgeführt, die als Pumpe oder Mischer ausgestaltet ist. Die mit der schaumbildenden Lösung in Berührung kommenden Teile der Maschine bestehen aus einem elektrisch isolierenden Material.

Im Laufe des erfindungsgemäßen Verfahrens wird als schaumbildender Zuschlagstoff vorzugsweise eine 20 %-ige Lösung der einfachsten Kaliseife verwendet. Aufgrund der praktischen Erfahrungen können jedoch viele an sich bekannte schaumbildende Zuschlagsstoffe verwendet werden, deren pH-Wert mindestens 7 beträgt bzw. deren pH-Wert in dem basischen Bereich liegt.

Als Bindemittel werden hydraulische Bindemittel, vorzugsweise Portlandzement, insbesondere schnellbindende Zemente und/oder Gips und/oder Aluminatzemente, verwendet.

Als Füllstoff kann ein natürliches oder künstliches Mahlgut verwendet werden. Gegebenenfalls können mineralische Körner mit einem geringen Raumgewicht, so z. B. Rhyolithderivate mit einer Vitrophyrstruktur, Vermikulit, expandierter Perlit usw. verwendet werden. Als Füllstoff können ferner natürliche oder künstliche Faserstoffe, wie z. B. Asbestfasern, Mineralwolle, eventuell kaolin-oder tonerdereiche Wollen verwendet werden. Natürliche oder künstliche, körnige bzw. faserige organische Stoffe, wie z. B. Abfälle der Textilindustrie, synthetische Granulate, Sägemehl, Holzmehl, Schlamme aus der Papierindustrie und sonstige Abfälle bzw. deren Mischungen werden auch erfolgreich eingesetzt.

Die quantitativen Verhältnisse der hydraulischen Bindemittel, der Basis- und Füllstoffe und des Wassers können im voraus nicht angegeben werden, da diese Verhältnisse in Abhängigkeit von dem Anwendungsgebiet, der geforderten physikalischen Parameter des Produktes, der Zweckmäßigkeit usw. geändert werden können.

Die elektrisch aufgeladene aufgeschäumte Masse wird in Formen mit beliebigen Maßen und Format eingefüllt und auf natürlichem oder künstlichem Wege getrocknet. Nach erfolgter Trocknung - oder eventuell ohne Trocknung, falls dies gefordert wird - wird das Produkt ausgebrannt. Die die Trocknung und das Ausbrennen betreffenden Einzelheiten gehören nicht zum Gegenstand der Erfindung. Sie werden daher nicht näher erläutert.

Zur besseren Veranschaulichung des erfindungsgemäßen Verfahrens werden im folgenden einige Beispiele in Form von Tabellen angegeben.

In Tabelle I ist die Zusammensetzung von sechs Schaumsorten enthalten, die mit H-01, H-02 ... H-06 bezeichnet sind. In Tabelle II wird von den einzelnen Schaumstoffen der Beispielserie ausgegangen und es wird die materielle Zusammensetzung der hergestellten wärmeisolierenden Formkörper angegeben. Die einzelnen Formkörper sind mit SZ-01, SZ-02 ... SZ-06 bezeichnet.

**Tabelle I**

| | | H-01 | H-02 | H-03 | H-04 | H-05 | H-06 |
|---|---|---|---|---|---|---|---|
| Wasser | Lit. | 5 | 5 | 5 | 5 | 5 | 5 |
| Fettalkohol-Sulfonat | g | 200 | | | | | |
| GENAPUR FAS® | g | | 50 | | | | |
| Alkyl-Polyäthylen-Glykoläther--Sulfat-Natriumsalz (ungarisches Produkt) | g | | | 60 | | | |
| Kaliseife | g | | | | 250 | | |
| Eiweißlösung | g | | | | | 50 | |
| PVA 10 %-ige Lösung | g | | | | | | 300 |
| Strömungsdauer | Minuten | 5 | 6 | 7 | 5 | 5 | 8 |
| Schaumvolumen | Lit. | 18 | 40 | 32 | 20 | 15 | 15 |
| Durchschnittliche Blasongröße | μm | 300 | 250 | 200 | 300 | 250 | 200 |
| Elektrisches Potential | mV | 600 | 900 | 800 | 150 | 1000 | 500 |
| Schaumstabilität (Halbwasserzeit) | Minuten | 120 | 180 | 150 | 120 | 180 | 120 |

Die Lösungen mit den in der Tabelle I angegebenen Zusammensetzungen werden mittels einer aus elektrisch isolierendem Material verfertigten, zur reibungselektrischen Aufladung geeigneten Trübenpumpe, in einem geschlossenen System, während der in der Tabelle I angeführten Zeitdauer zur Zirkulation gebracht. Das Produkt GENAPUR FAS ® (Alkyl-Polyäthylenglykoläther Sulfat-Natriumsalz) wird von der Firma Hoechst hergestellt. Sollte die elektrische Aufladung des Schaumes nicht stattfinden, liegt der Schaumstabilitätswert (bzw. die Halbwasserzeit) immer unter 30 Minuten.

Die zur Herstellung der Formkörper erforderliche Materialzusammensetzung unter Anwendung der Schäume nach Tabelle I ist wie folgt:

**Tabelle II**

| | | SZ-01 | SZ-02 | ZS-03 | ZS-04 | ZS-05 | ZS-06 |
|---|---|---|---|---|---|---|---|
| Wasser | Lit. | 10 | 10 | 10 | 10 | 5 | 20 |
| Portlandzement | Kg | 27 | 23 | | | | |
| Tonerdezement | Kg | | | | 30 | | |
| Expandierter Perlit | Kg | 3 | | | | | |
| Gips | Kg | | | 25 | | | |
| Sand | Kg | | 6 | | | | |
| Tonerde | Kg | | | | 5 | 10 | |
| Feuerfestes Mahlgut | Kg | | | | | | 40 |
| Asbest | Kg | | 1 | | | | |

| | | | | | | | |
|---|---|---|---|---|---|---|---|
| Aluminiumoxy-hydrat | Kg | | | | 3 | 3 | 5 |
| Aluminium-fluorid | Kg | | | | | 0,4 | 0,4 |
| Natrium-fluorid | Kg | | | | | 0,2 | 0,2 |
| Monoaluminium-phosphat-lösung (50 %-ige wässerige Lösung) | Lit. | | | | | 0,6 | 1,0 |
| H-01 Schaum | Lit. | | | 15 | | | |
| H-02 Schaum | Lit. | | | | | 8 | |
| H-03 Schaum | Lit. | | | | | | 6 |
| H-04 Schaum | Lit. | | | | 15 | | |
| H-05 Schaum | Lit. | | 15 | | | | |
| H-06 Schaum | Lit. | 15 | | | | | |

Die wichtigsten technischen Parameter der in den Beispielen angeführten Grund- und Zuschlagsstoffe werden nachfolgend angegeben:

Portlandzement wird in der Qualität PZ-450 verwendet. Der verwendete Aluminiumzement enthält 72 % $Al_2O_3$ und 25 % CaO. Der verwendete Sand enthält 96 % $SiO_2$; die Korngröße liegt im Bereich zwischen 0 und 1 mm.

Die Korngröße des feuerfesten Schiefermahlgutes bewegt sich zwischen 0 und 0,06 mm, der $Al_2O_3$-Gehalt beträgt 38 %. Die Korngröße des expandierten Perlits beträgt 2 mm, das Litergewicht ist 80 g/l. Die Faserlänge des (kurzfaserigen) Asbests beträgt 2-3 mm. Gips wird in der handelsüblichen Normalqualität verwendet. Das Tonerdehydrat bzw. Aluminiumoxyhydrat enthält 3 $H_2O$ Hydratwasser. Aluminiumfluorid und Natriumfluorid sind von technischer Qualität. Die Tonerde stellt das Mahlgut des $\alpha$-$Al_2O_3$ dar, Fraktion unter 0,1 mm, der $Al_2O_3$-Gehalt beträgt 99 %.

Die Füllstoffe, Bindemittel und Aggregate sowie der Schaum werden in einen, mit Mischflügeln versehenen Mischer in der folgenden Reihenfolge eingewogen: Wasser, Bindemittel, Füllstoffe, Schaum, Aggregate. Der derweise erzeugte Schlamm wird 3 bis 5 Minuten lang, mit einer Geschwindigkeit von min. 60 Umdrehungen/Minute homogenisiert. Der gemischte Schlamm wird in Formen eingegossen. Nach der Erhärtung werden die Elemente entschalt und künstlich oder natürlich getrocknet. Die Formstücke mit der Materialzusammensetzung SZ-05 und SZ-06 wurden nach der Trocknung ausgebrannt (SZ-05 bei 1280°C, SZ-06 bei 1550°C).

Die physikalischen und mechanischen Eigenschaften der als Beispiel angeführten Produkte sind in der folgenden Tabelle III zusammengefaßt:

**Tabelle III**

| | | SZ-01 | SZ-02 | SZ-03 | SZ-04 | SZ-05 | Sz-06 |
|---|---|---|---|---|---|---|---|
| Körperdichte | Kg/m³ | 520 520 | 550 | 400 | 700 | 550 | 520 |
| Wärmeleitzahl bei 20°C | W/mK | 0,10 | 0,12 | 0,08 | 0,16 | 0,12 | 0,11 |
| Druckfestigkeit | MPa | 4,0 | 4,5 | 2,0 | 15,0 | 7,5 | 7,0 |
| Erhärtungsdauer | h | 6 | 6 | 30 | 8 | 20 | 28 |
| Schwindung bei Trocknung | % | 1 | 0,5 | 0,5 | 0,8 | 0,5 | 0,5 |
| Schwindung bei Brennen | % | - | - | - | - | 4 | 6 |

Das nach dem erfindungsgemäßen Verfahren hergestellte Produkt kann bei Gebäuden als Außen- und Innenisolierung, zur Gestaltung von nichttragenden Wänden, zur Herstellung von Fußböden und Decken und in sandwichartigen Konstruktionen als Isolierteile verwendet werden. Es ist weiterhin als Feuerschutz für Stahlkonstruktionen, für die Auskleidung von Straßengräben, Kanälen und dergleichen und außerdem auf zahlreichen anderen Gebieten anwendbar.

Bei der Verwendung von Aluminatzement und feuerfesten Zuschlagsstoffen kann das Produkt nach der Erhärtung ohne Vorbrennen oder nach erfolgtem Vorbrennen zur Herstellung von feuerfesten wärmeisolierenden Auskleidungsmaterialien verwendet werden.

Aus den angeführten Beispielen geht hervor, daß das erfindungsgemäße Verfahren äußerst einfach

6

durchgeführt werden kann. Zur Durchführung des erfindungsgemäßen Verfahrens sind weder Spezialanlagen noch Anlagen erforderlich, die teuer sind und einen großen Wartungsaufwand erfordern. Das unter Anwendung des erfindungsgemäßen Verfahrens hergestellte Produkt weist äußerst günstige Eigenschaften auf. Seine Körperdichte, seine Wärmeleitfähigkeit und seine Festigkeitseigenschaften sind beinahe unvergleichbar.

**Patentansprüche**

1. Verfahren zur Herstellung eines Formkörpers oder einer Bekleidung in Form eines Festschaumstoffes mit schwammiger Struktur, insbesondere zur Herstellung einer wärmeisolierenden und/oder feuerfesten Bekleidung oder eines Wandfutters bzw. einer Gebäudewand, im Laufe dessen aus der mit einer Flüssigkeit verfertigten Mischung eines oberflächenaktiven schaumbildenden Materials, eines hydraulischen Bindemittels, (eines Füllstoffes und eventuell eines sonstigen Zuschlagstoffes ein Formkörper oder eine Bekleidung durch Formgebung, durch die darauffolgende Trocknung und/oder Ausbrennen erzeugt wird, dadurch gekennzeichnet, daß der aus an sich bekannten schaumbildenden Lösungen mittels eines Mischers oder einer Pumpe, deren mit dem Schaum in Berührung stehenden Oberflächen aus einem elektrisch isolierenden Material bestehen, gewonnene Schaum während der Herstellung infolge der Reibung elektrisch aufgeladen wird, so daß die Lamellenoberflächen zwischen den Gaszellen des Schaums einen Potentialwert im Bereich zwischen 50 und 2000 mV aufweisen, und das Bindemittel, der Füllstoff und eventuelle sonstige Zuschlagstoffe oder deren mit einer Flüssigkeit verfertigte Mischung während der Aufladung oder darauffolgend zugegeben werden.

2. Verfahren nach Anspruch 1, dadurch gekennzeichnet, daß die Lamellenoberflächen zwischen den Gaszellen des Schaums einen Potentialwert im Bereich zwischen 150 und 1000 mV aufweisen.

**Claims**

1. A process of producing a moulded body or a lining in the form of a solid foam material having a spongy structure, particularly for making a thermally insulating and/or refractory lining or wall covering or a building wall, wherein a moulded body or a covering is provided from a mixture, prepared using a liquid, of a surfactant foam-forming material, a hydraulic binder, a filler and optional aggregate by shaping, subsequent drying and/or baking, characterized by obtaining the foam from known-perse foam-forming solutions by means of a mixer or a pump of which the foam-contacting surfaces consist of an electrically insulating material, with the foam during such preparation assuming by friction an electrical charge such that the lamellar surfaces between the gas cells of the foam have a potential ranging between 50 and 2000 mV, and by adding while such charging takes place or afterwards the binder, the filler and any optional aggregate or the mixture thereof prepared by means of a liquid.

2. A process as in claim 1, characterized by the lamellar surfaces between the gas cells of the foam having a potential ranging from 150 to 1000 mV.

**Revendications**

1. Procédé de fabrication d'un produit en forme ou d'un revêtement formé d'une mousse dure à structure poreuse, en particulier pour la fabrication d'un revêtement calorifuge ou réfractaire ou d'une garniture murale, par exemple une paroi de bâtiment, au cours duquel on fabrique un produit en forme ou un revêtement par une opération de mise en forme suivie d'un séchage et/ou d'une cuisson à partir d'un mélange, préparé à l'aide d'un liquide, d'un produit moussant tensio-actif, d'un liant hydraulique, d'une matière de remplissage et éventuellement d'un autre additif, caractérisé en ce que la mousse , extraite de solutions moussantes connues en soi au moyen d'un mélangeur ou d'une pompe dont les surfaces en contact avec la mousse sont constituées d'un matériau électriquement isolant, est chargée électriquement pendant la fabrication, par suite du frottement, de sorte que les surfaces des lamelles entre les cellules gazeuses de la mousse présentent un potentiel compris entre 50 et 2000 mV, et en ce que le liant, la matière de remplissage et les autres additifs éventuels ou leur mélange avec un liquide, sont ajoutés pendant ou après la charge.

2. Procédé selon la revendication 1, caractérisé en ce que les surfaces des lamelles entre les cellules gazeuses de la mousse présentent un potentiel compris entre 150 et 1000 mV.